(19)

Europäisches Patentamt

European Patent Office

Office européen des brevets

(11) **EP 2 974 861 A1**

(12) **EUROPEAN PATENT APPLICATION**
published in accordance with Art. 153(4) EPC

(43) Date of publication:
**20.01.2016 Bulletin 2016/03**

(21) Application number: **14763682.3**

(22) Date of filing: **25.02.2014**

(51) Int Cl.:
**B32B 27/34** (2006.01)     **C08G 69/40** (2006.01)
**C08K 3/36** (2006.01)     **C08K 5/20** (2006.01)
**C08L 77/00** (2006.01)

(86) International application number:
**PCT/JP2014/054488**

(87) International publication number:
**WO 2014/141871 (18.09.2014 Gazette 2014/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.03.2013   JP 2013047962**

(71) Applicant: **Toyobo Co., Ltd.**
**Osaka-shi**
**Osaka 530-8230 (JP)**

(72) Inventor: **MIYAGUCHI Yoshinori**
**Inuyama-shi**
**Aichi 484-8508 (JP)**

(74) Representative: **von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(54) **POLYAMIDE-BASED RESIN FILM**

(57)     In order to provide a biaxially oriented polyamide-based resin film which is excellent in laminate strength, laminate strength in an immersed-in-water state after the hot water treatment, pinhole resistance, impact resistance, transparency and keep good appearance even after being subjected to a hot water sterilization treatment, a biaxially oriented polyamide-based resin film, which comprises a polyamide resin and 1 to 5% by mass of a polyamide-based block copolymer and is laminated with an adhesion-modifying layer containing a copolymerized polyester on at least one surface thereof, comprises a hard constituent of a cyclic lactam residue having 4 to 10 carbon atoms and a soft constituent of a residue of a polyoxypropylene glycol or a polyoxytetramethylene glycol having a number average molecular weight of 500 to 3000, and the content X of the hard constituent, the content Y of the soft constituent, and the number average molecular weight Mn of the soft constituent satisfy the following equations (1) and (2):

$$X + Y = 100 \text{ (parts by mass)} \quad (1);$$

$$478.74 \times Mn^{-0.2989} \leq Y \leq 93 \text{ (parts by mass)} \quad (2).$$

EP 2 974 861 A1

**Description**

TECHNICAL FIELD

The present invention relates to a biaxially oriented polyamide-based resin film which is excellent in laminate strength, impact resistance, pinhole resistance (bending fatigue resistance), particularly pinhole resistance in low temperature environments, transparency, and piercing resistance, which is effective for preventing bag breakage at the time of transportation and storage of goods in the case of being used as a packaging material for wrapping foodstuffs or the like, and further effective for preventing bag breakage by dropping of a large and heavy bag for commercial use, and which is suitable for various kinds of packaging uses and designed packaging materials with high design properties taking advantage of the transparency, and also relates to the production method of the resin film.

BACKGROUND ART

Conventionally, unstretched films and stretched films made of aliphatic polyamides typified by nylon 6 and nylon 66 have been used widely for various kinds of packaging materials since they are excellent in impact resistance and pinhole resistance.

Further, in the case of filling and packaging of a liquid such as soup or condiment, pinhole-resistant stretched polyamide-based films having a monolayer configuration and made more flexible by incorporating various kinds of elastomers in aliphatic polyamides have been used widely to improve pinhole resistance and impact resistance.

Regarding the above-mentioned conventional pinhole-resistant films, films of aliphatic polyamides mixed with polyolefin-based elastomers have good pinhole resistance and impact resistance at normal temperature, but are deteriorated in pinhole resistance and impact resistance under low temperature environments, leading to a problem that pinholes tend to be formed owing to bending fatigue at the time of transportation of goods. If pinholes are formed in packaging materials for goods, the pinholes may cause contamination due to leakage of the contents and may cause putrefaction of the contents and growth of mold, which leads to a decline in commodity value.

To solve the problems as described above, for example, Patent Documents 1 and 2 each describe a film of an aliphatic polyamide mixed with a polyamide-based elastomer. Films described in Patent Documents 1 and 2 are good in pinhole resistance and impact resistance in low temperature environments, and hardly form pinholes due to bending fatigue even in low temperature environments.

However, films described in Patent Documents 1 and 2 have a problem that the laminate strength is low in the case where a polyethylene-based film is dry-laminated to provide heat sealing properties.

Further, since a polyamide elastomer has a large dispersion diameter in aliphatic polyamides, impact at the time of dropping a bag product is successively propagated through polyamide elastomer particles having a large particle size dispersed in a polyamide film to tend to make tearing of the film easy in the thickness direction. Accordingly, a large-sized liquid-filled bag made of a pinhole resistant polyamide film to which a polyamide elastomer is added tends to cause breakage by dropping.

Further, in the case where the thickness of a polyethylene resin layer for providing heat sealing properties is increased for the purpose of providing stiffness to a bag product to improve handling property at the time of producing bags or to improve workability at the time of filling bags with contents, or in the case of a bag product having a structure of a polyamide-based film/polyethylene resin for which a harder polyethylene resin is selected, pinholes are formed easily since the stiffness of the bag product is high. A polyamide-based film used for the above-mentioned uses is therefore required to have higher pinhole resistance.

However, if the content of a polyamide elastomer in a film is increased to improve pinhole resistance, there occurs a problem that the laminate strength is further reduced and transparency is deteriorated.

A demand for large-sized liquid-filled bags for commercial use with a volume of 1 L or more and a demand for a bag-in-box, which is a packaging form for storing, keeping, and transporting large-sized plastic bags in a cardboard box, is growing. Polyamide films used for these purposes are strongly required to have pinhole resistance and impact resistance, and further required to have strong resistance to bag breakage by dropping and high strength against cohesive failure in the thickness direction of the films in order to package a liquid material having a large volume.

Still further, there are many products in the market which have been subjected to a sterilization treatment by being boiled in hot water after the contents are packed in the packaging bags to prolong the quality assurance period. Thus, polyamide films are required to keep adhesive strength in hot water, keep adhesive strength in a water adhesion condition, and cause no appearance deterioration such as whitening in water.

As described above, presently available pinhole resistant polyamide-based films fail to sufficiently satisfy the quality required in the market.

PRIOR ART DOCUMENTS

PATENT DOCUMENTS

Patent Document 1: JP-A-2002-179817
Patent Document 2: JP-A-hei-11-322974

SUMMARY OF THE INVENTION

PROBLEMS TO BE SOLVED BY THE INVENTION

In consideration of the above-mentioned problems of presently available pinhole resistant polyamide-based films, the present invention aims to provide a biaxially oriented polyamide-based resin film which is excellent in laminate strength, impact resistance, transparency, piercing resistance, and pinhole resistance, particularly in pinhole resistance in low temperature environments, which is effective for preventing bag breakage at the time of transportation and storage of goods in the case of being used as a packaging material for wrapping foodstuffs, and further effective for preventing bag breakage by dropping of a large-sized liquid bag for commercial use or the like, which can keep satisfactory adhesive strength and good appearance even after being subjected to a hot water sterilization treatment, and which is suitable for various kinds of packaging uses, and also to provide a production method thereof.

Further, a heat sealing polyamide resin film laminate can be obtained by forming an adhesion-modifying layer on the surface of the polyamide resin film, and forming a sealant layer thereon by a dry lamination method or an extrusion lamination method. After being subjected to printing if necessary, this film laminate is formed into a bag, for example, and filled with contents to provide packaged goods.

Further, in the case of a packaging material used for liquids, if water penetrates between each layers forming a polyamide resin film laminate having a sealant layer, the adhesive force between the layers is sometimes significantly lowered, and this results in breakage when this polyamide resin film laminate is used as a packaging bag. For example, in the case where a food-packaging bag made of a polyamide resin film laminate having a sealant layer is subjected to a treatment with boiling water or a retort treatment, this problem becomes significant, and the bag is more easily torn. Thus, the present invention aims to provide a biaxially oriented polyamide-based resin film which has extremely high peel strength (laminate strength) against water penetration after the hot water treatment, and which is not broken by the hot water treatment or in distribution and preservation process thereafter, and to provide a production method thereof.

SOLUTIONS TO THE PROBLEMS

The present inventors have diligently studied for solving the problems and as a result, have reached the present invention. A film which solves the problems is a biaxially oriented polyamide-based resin film comprising a polyamide resin and 1 to 5% by mass of a polyamide-based block copolymer, and being laminated with an adhesion-modifying layer containing a copolymerized polyester on at least one surface thereof, wherein the polyamide-based block copolymer comprises a hard part of a cyclic lactam residue having 4 to 10 carbon atoms and a soft part of a residue of a polyoxypropylene glycol or a polyoxytetramethylene glycol having a number average molecular weight of 500 to 3000, and the content X of the hard part, the content Y of the soft part, and the number average molecular weight Mn satisfy the following equations (1) and (2):

$$X + Y = 100 \text{ (parts by mass)} \quad (1);$$

$$478.74 \times Mn^{-0.2989} \leq Y \leq 93 \text{ (parts by mass)} \quad (2).$$

The biaxially oriented polyamide-based resin film preferably contains 0.05 to 0.30% by mass of ethylene bis(stearic acid amide) and 0.3 to 0.8% by mass of porous agglomerated silica having a fine pore volume of 1.0 to 1.8 ml/g and an average particle size of 2.0 to 7.0 $\mu$m.

The biaxially oriented polyamide-based resin film preferably has a monolayer structure or a co-extruded laminated structure having two or more layers.

The adhesion-modifying layer is preferably formed by applying a coating liquid containing a copolymerized polyester-based aqueous dispersion. The copolymerized polyester-based aqueous dispersion contains grafted polyester together with water and/or an aqueous organic solvent, and the grafted polyester preferably has a polyester main chain on which a radical polymerizable monomer having a hydrophilic group is grafted.

The production method according to the present invention is characterized by involving carrying out two-stage stretching of a polyamide-based resin sheet cooled and solidified by an electrostatic adhesion method in the longitudinal direction, successively carrying out different temperature stretching in the transverse direction in a manner that the stretching finishing temperature is higher than the stretching starting temperature, next carrying out a heat fixation treatment, and further carrying out re-relaxing treatment at a temperature less than the initial relaxing temperature.

EFFECTS OF THE INVENTION

In the present invention, since the biaxially oriented polyamide-based resin film has excellent resistance to bag breakage by dropping owing to excellent flexibility, pinhole resistance, and high laminate strength, is highly transparent, and is also excellent in slipping properties, the film has good workability in the printing processing, bag-producing processing, etc.

Further, the biaxially oriented polyamide-based resin film is suitable for large-sized bags for liquids since it has high laminate strength and accordingly exhibits excellent resistance to bag breakage by dropping and water-proof adhesive properties.

Still further, since the biaxially oriented polyamide-based resin film has high transparency, the film can be used suitably for a wide range of packaging uses while satisfying packaging with high design properties which requires transparency.

In addition, the biaxially oriented polyamide-based resin film of the present invention has an adhesion-modifying layer containing a copolymerized polyester formed on at least one surface of a polyamide film substrate, and is accordingly excellent in water-proof adhesive properties and hot water resistant adhesive properties with a sealant material layered thereon by dry lamination, extrusion lamination, or the like. Consequently, a packaging bag formed using the biaxially oriented polyamide-based resin film of the present invention seldom causes bag breakage even if being subjected to a treatment with boiling water or to a retort treatment, and is therefore widely usable as a packaging bag for water-containing foodstuffs, pharmaceutical products, and toiletries.

MODE FOR CARRYING OUT THE INVENTION

Hereinafter, embodiments of a biaxially oriented polyamide-based resin film of the present invention will be described in detail.

The present invention is a biaxially oriented polyamide-based resin film comprising a polyamide resin and 1 to 5% by mass of a polyamide-based block copolymer (elastomer), and being laminated with an adhesion-modifying layer containing a copolymerized polyester on at least one surface thereof, wherein the polyamide-based block copolymer comprises a hard part of a cyclic lactam residue having 4 to 10 carbon atoms and a soft part of a residue of a polyoxypropylene glycol or a polyoxytetramethylene glycol having a number average molecular weight of 500 to 3000, and the content X of the hard part, the content Y of the soft part, and the number average molecular weight Mn of the soft part satisfy the following equations (1) and (2):

$$X + Y = 100 \text{ (parts by mass)} \quad (1);$$

$$478.74 \times Mn^{-0.2989} \leq Y \leq 93 \text{ (parts by mass)} \quad (2).$$

In the present invention, polyamide resins such as nylon 6, nylon 7, nylon 11, nylon 12, nylon 66, nylon 6T, nylon MXD6 (polymetaxylylene adipamide), nylon 6I, and nylon 46, and their copolymers, blended resins, and alloys are used as the polyamide resin. Among these resins, nylon 6, nylon 6T, nylon 6I, nylon MXD6, and their blended resins are preferably used.

The content of an oligomer in the polyamide resin is preferably not more than 1% by mass. If the oligomer content exceeds 1% by mass, the oligomer tends to adhere to a cooling roll in a process of winding a melted polyamide-based resin mixture extruded out of a die on a cooling roll and solidifying the resin mixture in a sheet-like form.

In the case where nylon 6 is used as the polyamide resin, the relative viscosity of nylon 6 is preferably 2.5 to 3.6.

If the relative viscosity is less than 2.5, the impact strength of the film after biaxial stretching is reduced. On the other hand, if the relative viscosity exceeds 3.6, both end parts of the film may sometimes be whitened or broken at the time of transverse stretching.

In the present invention, it is necessary that the content of a polyamide-based block copolymer in the film is 1 to 5% by mass.

If the content is less than 1% by mass, although laminate strength of the film is excellent, no pinhole resistance is exhibited. On the other hand, if the content exceeds 5% by mass, although pinhole resistance of the film is excellent, laminate strength and impact strength are lowered, and stiffness of the film is reduced. Consequently, a bag product made using the biaxially oriented polyamide-based resin film is deteriorated in resistance to bag breakage by dropping and rigidity, so that the bag tends to be broken easily. Further, if the content exceeds 5% by mass, since the transparency of the film is deteriorated, the film cannot be used for a packaging material with high design properties taking advantage of the transparency.

In the present invention, the polyamide-based block copolymer is a substance having rubbery elasticity, and has a hard part comprising a residue of a cyclic lactam having 4 to 10 carbon atoms and a soft part comprising a residue of a polyoxypropylene glycol or a polyoxytetramethylene glycol having a number average molecular weight of 500 to 3000. Further, in the polyamide-based block copolymer, a compound having a reactive group for bonding the hard part with the soft part is introduced in the same molar amount as that of the polyoxyalkylene glycol composing the soft part.

Compounds having an isocyanate group, an epoxy group, a carboxylic acid group or the like may be used as the compound having the reactive group. In terms of productivity in the polymerization process of the polyamide-based block copolymer, it is preferable to use aliphatic dicarboxylic acids such as succinic acid, glutaric acid, and adipic acid, aromatic dicarboxylic acids such as terephthalic acid, isophthalic acid, and orthophthalic acid, or anhydrides thereof, and it is more preferable to use aliphatic dicarboxylic acids.

If the hard part is a residue of a cyclic lactam having less than 4 carbon atoms, for example, a $\beta$-propiolactam residue, pinhole resistance of the film is lowered. On the other hand, if the hard part is a residue of a cyclic lactam having more than 10 carbon atoms, for example, an $\omega$-laurinlactam residue, since the dispersion particle size of the polyamide-based block copolymer is large, the dropping impact is propagated in the film layer, and the impact is propagated through respective dispersion particles to cause cohesive failure in the nylon film layer. Accordingly, a film made from a block copolymer having a hard part of a residue of $\omega$-laurinlactam fails to simultaneously satisfy high laminate strength and resistance to bag breakage by dropping which are necessary as a heavy bag for liquids although the film exhibits excellent flexibility and pinhole resistance. Consequently, the film is suitable for a small-sized bag such as a small bag for soup, but is unsuitable for a large-sized bag for liquids for commercial uses, a bag-in-box wrapping, or the like.

In the case where the polyamide resin is nylon 6, it is preferable to use $\varepsilon$-caprolactam having an analogous structure for the hard part of the polyamide-based block copolymer.

If the hard part is a residue of $\varepsilon$-caprolactam, the adhesive properties in the interface between nylon 6 and the block copolymer, which are main resins composing the film, are improved, so that breakage in the interface is hard to occur even if high impact is propagated. Further, the dispersion particle size of the polyamide-based block copolymer is reduced owing to that compatibility between nylon 6 and the block copolymer is improved, and therefore, breakage in the interface between the film layers is hardly propagated through each dispersion particles of the polyamide-based block copolymer. Accordingly, the film is provided with high laminate strength and high resistance to bag breakage by dropping.

If the dispersion particle size of the polyamide-based block copolymer is too small, the rubber elasticity is hardly exhibited, and therefore a large quantity of the polyamide-based block copolymer is required to obtain flexibility and pinhole resistance needed as a packaging bag for liquids.

To simultaneously satisfy excellent laminate strength, resistance to bag breakage by dropping, flexibility, and pinhole resistance, it is important to first improve the compatibility with a polyamide resin serving as a film base and accordingly improve the adhesive force in the interface between the polyamide resin and the polyamide-based block copolymer, and then, to improve the exhibition of rubber elasticity of the polyamide-based block copolymer, it is important that the composition is capable of inhibiting miniaturization of dispersion particles. For this purpose, it is important to keep the content and the number average molecular weight of the soft part within proper ranges.

On the other hand, if the soft part comprises a residue of polyoxyethylene glycol, when the biaxially oriented polyamide-based resin film is subjected to a boiling treatment or immersed in water, the film is whitened in pearl-like tone. Further, if the soft part comprises a residue of polyoxyhexamethylene glycol, since a strand of the polyamide-based block copolymer extruded out of a polymerization can is so soft that cutting failure is caused, and consequently, chips having a length longer than 5 cm or several to more than a dozen bonded chips that are incompletely cut away, that is, chips in irregular forms, are often produced, and thus the productivity of the polymerization process is lowered.

The number average molecular weight of the polyoxypropylene glycol or the polyoxytetramethylene glycol is required to be 500 to 3000, preferably 850 to 2800, more preferably 1000 to 2500, and most preferably 1300 to 2300.

If the number average molecular weight is less than 500, the pinhole resistance of the film is scarcely improved. On the other hand, if the number average molecular weight exceeds 3000, not only the laminate strength of the film is lowered but also the transparency of the film is deteriorated. As a result, the biaxially oriented polyamide-based resin film cannot be used for a large bag for liquids for commercial use, a bag-in-box, a packaging material with high design properties taking advantage of the transparency, or the like.

To improve the pinhole resistance of the film, it is necessary to increase the content of the soft part in the case where the number average molecular weight of a polyoxypropylene glycol or a polyoxytetramethylene glycol used for the soft part is small. On the other hand, if the number average molecular weight is large, the content of the soft part may be small. That is, to exhibit excellent pinhole resistance, it is required that the content X (parts by mass) of the hard part, the content Y (parts by mass) of the soft part, and the number average molecular weight Mn satisfy $478.74 \times Mn^{-0.2989} \leq Y \leq 93$ when X + Y = 100.

If Y is less than $478.74 \times Mn^{-0.2989}$ parts by mass, the dispersion particle size of the polyamide-based block copolymer is so small that the pinhole resistance of the film is deteriorated. On the other hand, if Y exceeds 93 parts by mass, not only polymerization reactivity of the polyamide-based block copolymer is lowered but also a strand extruded out of a polymerization can is so soft that cutting failure is caused, and consequently, chips in irregular forms are often produced, and thus the productivity of the polymerization process is lowered. Further, the dispersion particle size of the polyamide-based block copolymer in the film is too large, so that the film tends to cause cohesive failure. As a result, in the case where the biaxially oriented polyamide-based resin film and a polyethylene-based film are laminated, even if their adhesive properties are sufficient, it is impossible to obtain excellent laminate strength.

For example, the pinhole resistance of the film can be improved to extent level required for a bag for liquids to be distributed at low temperature if the polyamide-based block copolymer contains not less than 70 parts by mass of the soft part in the case where the number average molecular weight of the soft part is 650 to 850, and if the polyamide-based block copolymer contains not less than 62 parts by mass of the soft part in the case where the number average molecular weight of the soft part is 1000 to 2500.

In the polymerization process, to produce chips by cutting a strand of the polyamide-based block copolymer, a strand cutting method, a cutting-in-water method, a dicer cutting method, or the like can be employed. The cutting-in-water method is preferable among these methods in terms of suppression of production of chips in irregular forms in the polymerization process and suppression of raw material segregation in the film production process.

In the present invention, various kinds of additives such as a lubricant, a blocking prevention agent, a heat stabilizer, an antioxidant, an antistatic agent, a lightfast agent, and an impact resistance improver may be added to the film to an extent that the characteristics of the film are not hindered. Particularly, an organic lubricant such as ethylene bis(stearic acid amide) is preferable since the slipping properties of the film are further improved. In the case where the film configuration is a laminate configuration composed of two or more layers, the content in the entire layers or only in the surface layer is preferably 0.05 to 0.30% by mass, more preferably 0.10 to 0.25% by mass, and further more preferably 0.15 to 0.20% by mass.

If the content of ethylene bis(stearic acid amide) in the film is less than 0.05% by mass, the addition sometimes fails to contribute to improvement in the slipping properties. On the other hand, if the content exceeds 0.30% by mass, since ethylene bis(stearic acid amide) bleeds out to the film surface beyond necessity, the transparency of the film and the adhesive properties of the film surface are sometimes deteriorated.

Further, in order to improve the slipping properties, it is preferable to add inorganic fine particles with a prescribed fine pore volume to the film. Those usable as the inorganic fine particles are silica, titanium dioxide, talc, kaolinite, calcium carbonate, calcium phosphate, barium sulfate, or the like. Particularly, porous agglomerated silica is easy to control the fine pore volume, and is suitable for keeping good transparency even if being added in an amount proper for providing good slipping properties to the film.

Further, the fine pore volume of the porous agglomerated silica is preferably 1.0 to 1.8 ml/g, and further preferably 1.2 to 1.7 ml/g.

If the fine pore volume exceeds 1.8 ml/g, when an unstretched film is stretched, the porous agglomerated silica is deformed, so that the height of the surface projections is reduced, and the slipping properties of the film are deteriorated. On the other hand, if the fine pore volume is less than 1.0 ml/g, when an unstretched film is stretched, voids are excessively formed around the porous agglomerated silica, so that the transparency of the film is deteriorated.

Still further, the average particle size of the porous agglomerated silica is preferably 2.0 to 7.0 $\mu$m, and further preferably 3.5 to 7.0 $\mu$m.

If the average particle size is less than 2.0 $\mu$m, since surface projections are hardly formed at the time of stretching, it is sometimes impossible to obtain sufficient slipping properties. On the other hand, if the average particle size exceeds 7.0 $\mu$m, the surface projections are so large that light is scattered on the film surface, and thus the transparency is sometimes deteriorated. Further, the porous agglomerated silica becomes easy to drop because of contact with a transportation roll used in the film production process or processing process.

Still further, the content of the porous agglomerated silica in the film is preferably 0.3 to 0.8% by mass, and further preferably 0.4 to 0.7% by mass. If the content is less than 0.3% by mass, the surface projections are insufficient, and slipping properties of the film under high humidity are deteriorated. On the other hand, if the content exceeds 0.8% by mass, the transparency of the film is deteriorated.

In the present invention, a polyamide-based resin mixture is supplied to an extruder, extruded out of a T die at a temperature of 240 to 290°C, and cooled and solidified by a cooling roll at 20 to 50°C to give an unstretched sheet.

For the purpose of improving the flatness of an unstretched sheet, it is preferable to employ an electrostatic adhesion method or a liquid coating adhesion method in order to improve the adhesive properties between the sheet and the cooling roll.

In the case where an electrostatic adhesion method is employed, in order to lessen the thickness unevenness after stretching by making the crystallization degree of the sheet uniform, it is preferable to closely attach the sheet to a cooling roll by applying a high DC voltage of 2 to 30 kV to electrodes, and thereby generating streamer corona electric discharge. It is preferable to use, as the electrodes, those which have projections in a needle-like or saw-toothed form and capable of generating a lot of corona discharge, that is, those which have projections and having a specific resistance not more than 5 $\mu\Omega\cdot$cm, and it is preferable that the curvature radius of the tip ends of the projections is 0.01 to 0.07 mm.

If the applied voltage is less than 2 kV, glow discharge is generated, and if it exceeds 30 kV, spark discharge is generated, resulting in impossibility of stably generating streamer corona discharge.

Further, if the curvature radius is less than 0.01 mm, the tip end parts tend to be damaged easily at the time of handling the electrodes, and it results in generation of abnormal discharge attributed to the damage. On the other hand, if the curvature radius is more than 0.07 mm, the applied voltage must be increased, and thus spark discharge tends to be generated.

In the present invention, the polyamide-based resin film is produced by biaxially stretching an unstretched film which is obtained by melting and extruding a mixture containing a polyamide resin and a polyamide-based block copolymer.

In the case of stretching the film longitudinally and transversely in this order, if a longitudinal-longitudinal two stage stretching manner by a roll type stretching machine is employed, a biaxially oriented polyamide-based resin film with reduced bowing and a small difference of physical property in the width direction can be obtained.

In the longitudinal-longitudinal two stage stretching manner, it is preferable to carry out stretching 1.3 to 2.0 times at a temperature of 80 to 90°C, and thereafter, without cooling the resultant to a temperature equal to or lower than Tg, successively stretching the resultant 1.6 to 2.4 times at a temperature of 65 to 75°C. The total stretch ratio defined by the product of the stretch ratio by the first stage and the stretch ratio by the second stage is preferably 2.8 to 4.0 times. In addition, as a sheet heating method, a heat roll method and an infrared radiation method may be employed.

If the stretch ratio by the first stage is less than 1.3 times or the stretch ratio by the second stage is less than 1.6 times, the strain tends to be significant when the film is boiled. On the other hand, if the stretch ratio by the first stage exceeds 2.0 times, the thickness unevenness in the longitudinal direction tends to be significant, and if the stretch ratio by the second stage exceeds 2.4 times, breakage tends to occur in the transverse stretching step. Further, if the total stretch ratio is less than 2.8 times, the thickness unevenness in the longitudinal direction tends to be significant, and if the total stretch ratio exceeds 4.0 times, breakage tends to occur in the transverse stretching step.

In the present invention, the transverse stretching carried out successively to the longitudinal stretching by a tenter type stretching machine is preferably performed in a temperature differential stretching manner in which the temperature in a stretching starting zone is controlled to be the lowest stretching temperature, the temperature in latter zones is sequentially increased, and the temperature in the stretching finishing zone is controlled to be the highest temperature. If the temperature differential stretching manner is employed, a biaxially oriented polyamide-based resin film with reduced bowing and a small difference of physical property in the width direction can be obtained, and the strain of the film is suppressed when the film is boiled.

In the temperature differential stretching manner, transverse stretching 2.8 to 4.5 times is carried out at a temperature of 110 to 170°C, preferably 120 to 160°C, and it is preferable to carry out stretching in two or more different temperature zones, and preferably three or more different temperature zones.

If the stretch ratio is less than 2.8 times, the thickness unevenness in the transverse direction tends to be significant. On the other hand, if the stretch ratio exceeds 4.5 times, heat shrinkage ratio in the transverse direction becomes large, and both end parts of the film may sometimes be whitened or broken.

If the highest stretching temperature is less than 110°C, the strain tends to be significant when the film is boiled. If the highest stretching temperature exceeds 170°C, the thickness unevenness in the transverse direction tends to be significant.

In the present invention, the heat fixation treatment after biaxial stretching is preferably carried out at a temperature of 180 to 220°C, and further preferably carried out at a temperature of 205 to 215°C by gradually increasing the temperature from a temperature close to the stretching finishing temperature.

If the highest temperature for the heat fixation treatment is less than 180°C, not only the heat shrinkage ratio of the film becomes large but also the laminate strength is lowered. On the other hand, if the highest temperature for the heat fixation treatment exceeds 220°C, the impact strength of the film is reduced. That is, it is important to set the highest temperature for the heat fixation treatment in a manner of satisfying both of the laminate strength and the impact strength of the film.

In the present invention, it is preferable to carry out a relaxing treatment in the transverse direction by 2 to 10% after the heat fixation treatment.

If the relaxing ratio is less than 2%, the heat shrinkage ratio of the film tends to be high. On the other hand, if the relaxing ratio exceeds 10%, the film is brought into contact with a hot air blowing outlet, and thus the film tends to be scratched and at the same time, bowing is increased and the physical property difference in the width direction of the film becomes significant.

Further, in order to lessen the heat shrinkage ratio in the transverse direction without increasing the physical property difference of the film in the width direction due to bowing, it is preferable to once carry out the relaxing treatment at a temperature close to the highest temperature for the heat fixation treatment, and thereafter carry out a re-relaxing treatment at a temperature less than the temperature for the relaxing treatment by 20 to 30°C. The relaxing ratio in this case is defined as the sum of the first relaxing ratio and the re-relaxing ratio.

If the relaxing treatment in the longitudinal direction is carried out between a tenter type stretching machine and a film winder, bowing is reduced and the physical property difference of the film in the width direction is further reduced.

In the present invention, the biaxially oriented polyamide-based resin film may be produced by the so-called co-extrusion method. A laminating method employing a co-extrusion method may be laminating-in-die using a multi-manifold die or laminating-out-of-die using a feed block.

Further, a coating liquid of a resin having easy slipping properties, easy adhesive properties, gas barrier properties, or the like may be applied to a region between the roll type stretching machine and the tenter type stretching machine to provide various kinds of functions to the film.

Still further, the film may be subjected to a humidity conditioning treatment to improve the dimensional stability. In addition, the film surface may be subjected to a corona treatment, a plasma treatment, a flame treatment, or the like to improve the adhesive properties of the film with a printing ink, a vapor deposition metal, a vapor deposition metal oxide, or an adhesive used for lamination.

Even if the following recycled raw materials are added in an amount of about 50% by mass to the film, there is no problem such as colorization or generation of foreign matters. The recycled materials are obtained by grinding both end parts of the film cut off at the time of winding the film with a winder and parts which is generated at the time of cutting the film into the product roll with a slitter and not included in the product roll, and thereafter melting or pressurizing and compacting these parts.

In the present invention, the laminate strength is not less than 7 N/15 mm in the case where the biaxially oriented polyamide-based resin film and an unstretched low density polyethylene film are stuck to each other with an adhesive, and the number of defects is not more than 5 in Gelbo Flex test at 1°C. Therefore, the obtained laminate film can be used not only for small bags for soup or the like but also for pickles bags, bags for liquids for low temperature distribution, and large-sized bags for liquids for commercial uses.

Further, since the impact strength is not less than 0.9 J in the case of a configuration having a thickness of 15 μm, holes are hardly formed in bags for liquids even if a corner of the seal part of the bag or a projected matter other than the bag is stuck to the bag when the bags are transported or dropped in low temperature environments.

Still further, since the coefficient of static friction is not more than 0.8, the bag production processability is good. Moreover, since the haze is not more than 4.5%, the film is suitably used for a packaging material with high design properties taking advantage of the transparency.

Next, a method for laminating an adhesion-modifying layer on the surface of the above-mentioned polyamide-based resin film will be described. In the present invention, "dispersion" means an emulsion, a dispersion liquid, or a suspension, "grafting" means introduction of a graft part of a polymer different from a polymer main chain to the main chain, "grafted polyester" means a polyester having a graft part of a polymer different from the main chain of the polyester, and "aqueous solvent" means a solvent mainly containing water and optionally containing an aqueous organic solvent. Herein, an aqueous organic solvent preferably used is one having a solubility of not less than 10 g/L, more preferably not less than 20 g/L, and particularly preferably not less than 50 g/L in water at 20°C. Specific examples include alcohols such as methanol, ethanol, n-propanol, isopropanol, n-butanol, isobutanol, sec-butanol, tert-butanol, n-amyl alcohol, isoamyl alcohol, sec-amyl alcohol, tert-amyl alcohol, 1-ethyl-1-propanol, 2-methyl-1-butanol, n-hexanol, and cyclohexanol; ketones such as methyl ethyl ketone, methyl isobutyl ketone, ethyl butyl ketone, cyclohexanone, and isophorone; ethers such as tetrahydrofuran and dioxane; esters such as ethyl acetate, n-propyl acetate, isopropyl acetate, n-butyl acetate, isobutyl acetate, sec-butyl acetate, 3-methoxybutyl acetate, methyl propionate, ethyl propionate, diethyl carbonate, and dimethyl carbonate; glycol derivatives such as ethylene glycol, ethylene glycol monomethyl ether, ethylene glycol monoethyl ether, ethylene glycol monopropyl ether, ethylene glycol monobutyl ether, ethylene glycol ethyl ether acetate, diethylene glycol, diethylene glycol monomethyl ether, diethylene glycol monoethyl ether, diethylene glycol monobutyl ether, diethylene glycol ethyl ether acetate, propylene glycol, propylene glycol monomethyl ether, propylene glycol monobutyl ether, and propylene glycol methyl ether acetate; and 3-methoxy-3-methylbutanol, 3-methoxybutanol, acetonitrile, dimethylformamide, dimethylacetamide, diacetone alcohol, ethyl acetoacetate, or the like. One or more kinds of these aqueous organic solvents may be used in combination.

A copolymerized polyester aqueous dispersion which is an adhesion-modifying layer used in the present invention contains grafted polyester particles together with water and/or an aqueous organic solvent, and shows a semitransparent to milky white appearance. This grafted polyester has a polyester main chain and a graft part formed by a hydrophilic group-containing radical polymerizable monomer.

The content of the grafted polyester particles in the copolymerized polyester aqueous dispersion is usually 1% by mass to 50% by mass, and preferably 3% by mass to 30% by mass.

In the present invention, a polyester usable as the main chain of the grafted polyester is preferably a saturated or unsaturated polyester synthesized from at least a dicarboxylic acid component and a diol component, and the obtained polyester may be one kind of polymer or a mixture of two or more kinds of polymers. It is preferable that the polyester by itself is intrinsically not dispersed or dissolved in water. The polyester used in the present invention has a weight average molecular weight of 5000 to 100000, and preferably 10000 to 50000. If the weight average molecular weight is less than 5000, physical properties of the coating, such as post-processability of the dried coating film, are deteriorated. If the weight average molecular weight of the polyester exceeds 100000, dispersing in water becomes difficult. In terms of the dispersing in water, the weight average molecular weight is preferably not more than 100000.

The glass transition temperature of the polyester is not more than 65°C, preferably not more than 30°C, and more preferably not more than 10°C.

The graft part of the grafted polyester used in the present invention is preferably a polymer derived from a monomer mixture containing at least one kind of radical polymerizable monomer having either a hydrophilic group or a group which can be converted into a hydrophilic group later.

The polymer composing the graft part has a weight average molecular weight of 500 to 50000, and preferably 4000 to 30000. In the case where the weight average molecular weight is less than 500, the graft ratio is lowered, and it sometimes becomes impossible to sufficiently provide the polyester with hydrophilicity. In terms of polymerizability by solution polymerization, the upper limit of the weight average molecular weight is preferably 50000.

The glass transition temperature of the polymer composing the graft part is not more than 30°C, and preferably not more than 10°C.

The content ratio of a hydrophilic group-containing monomer to a monomer having no hydrophilic group in the polymer composing the graft part is determined on the basis of the amount of the hydrophilic group to be introduced into the grafted polyester, and it is 95 : 5 to 5 : 95, preferably 90 : 10 to 10 : 90, and more preferably 80 : 20 to 40 : 60 in mass ratio.

The hydrophilic group-containing monomer is not particularly limited, but may be, for example, a carboxyl group-containing monomer, a sulfonic acid group-containing monomer, or the like. One kind of these hydrophilic group-containing monomers may be used, or two or more kinds of these may be used in combination.

A method for introducing a carboxyl group-containing monomer and/or a sulfonic acid group-containing monomer may be copolymerization of a polycarboxylic acid anhydride, a sulfonic acid metal salt group-containing monomer, or the like at the time of the above-mentioned polyester polymerization. Specific examples of the polycarboxylic acid anhydride include trimellitic anhydride, phthalic anhydride, pyromellitic anhydride, succinic anhydride, maleic anhydride, 1,8-naphthalic anhydride, 1,2-cyclohexanedicarboxylic acid anhydride, cyclohexane-1,2,3,4-tetracarboxylic acid-3,4-anhydride, ethylene glycol bis(anhydrotrimellitate), 5-(2,5-dioxotetrahydro-3-furanyl)-3-methyl-3-cyclohexene-1,2-dicarboxylic acid anhydride, naphthalene-1,4,5,8-tetracarboxylic acid dianhydride, or the like, and one kind of these anhydrides may be used or two or more kinds of these may be used in combination. Specific examples of the sulfonic acid group-containing monomer include 5-sulfonatoisophthalic acid sodium salt, 5-sulfonatoisophthalic acid potassium salt, 4-sulfonaphthalene-2,7-dicarboxylic acid sodium salt, 5[4-sulfophenoxy]isophthalic acid sodium salt, or the like, and one kind of these may be used or two or more kinds of these may be used in combination.

In the case where a carboxyl group-containing monomer is used as the hydrophilic group-containing monomer, the total acid value of the grafted polyester is 600 to 4000 eq/$10^6$ g, preferably 700 to 3000 eq/$10^6$ g, and most preferably 800 to 2500 eq/$10^6$ g. In the case where the acid value is less than 600 eq/$10^6$ g, it becomes difficult to obtain a copolymerized polyester-based aqueous dispersion with small grain diameter when the grafted polyester is dispersed in water and/or an aqueous organic solvent, and further the dispersion stability is sometimes lowered. If the acid value exceeds 4000 eq/$10^6$ g, the waterproofness of the adhesion-modifying layer formed by using the copolymerized polyester aqueous dispersion may be lowered.

The mass ratio of the polyester main chain to the graft part of the grafted polyester is 40 : 60 to 95 : 5, preferably 55 : 45 to 93 : 7, and further preferably 60 : 40 to 90 : 10.

In the case where the ratio of the polyester main chain is less than 40% by mass, excellent processability of the grafted polyester, waterproofness, and excellent adhesive properties to various kinds of substrates may not be exhibited sufficiently. On the other hand, if the ratio of the polyester exceeds 95% by mass, the hydrophilic group amount of the graft part which provides hydrophilicity to the grafted polyester is insufficient, and a good aqueous dispersion may not be obtained.

The grafted polyester used in the present invention is dispersed in water by charging the polyester in a solid state in an aqueous medium or dissolving the polyester in a hydrophilic solvent and then charging in an aqueous medium. Particularly, in the case where an acidic group such as a sulfonic acid group or a carboxyl group is used as the radical polymerizable monomer having hydrophilicity, the grafted polyester is made into fine particles having an average particle size not more than 500 nm and dispersed in water by neutralizing the grafted polyester with a basic compound, and accordingly the copolymerized polyester aqueous dispersion can be prepared.

The adhesion-modifying layer used in the present invention may be formed on at least one surface of the polyamide-based resin film substrate, but may also be formed on both surfaces. The adhesion-modifying layer is formed by applying a coating liquid containing the copolymerized polyester aqueous dispersion to the polyamide-based resin film substrate.

The copolymerized polyester aqueous dispersion can be used as it is as a coating liquid for forming the adhesion-modifying layer, but may be mixed with a crosslinking agent (a resin for curing) and cured to provide high level of waterproofness to the adhesion-modifying layer. Those usable as the crosslinking agent (a resin for curing) may include phenol-formaldehyde resins, that is, condensation products of alkylated phenols and cresols, or the like with formaldehyde; adducts of urea, melamine, benzoguanamine, or the like with formaldehdye; amino resins, that is, alkyl ether compounds composed of these adducts and alcohols having 1 to 6 carbon atoms; polyfunctional epoxy compounds; polyfunctional isocyanate compounds; block isocyanate compounds; polyfunctional aziridine compounds; oxazoline compounds, or the like. One kind of these crosslinking agents may be used, or two or more kinds of these may be used in combination.

The addition amount of the crosslinking agent is preferably 5 to 40% by mass relative to the grafted polyester.

Methods to be employed as a method for applying a coating liquid containing the copolymerized polyester aqueous dispersion to a polyamide-based resin film substrate to form the adhesion-modifying layer may be publicly known coating methods in a gravure coating manner, a reverse coating manner, a die coating manner, a bar coating manner, a dip coating manner, or the like.

Coating is carried out with the coating amount of the coating liquid adjusted to 0.01 to 1 g/m$^2$, and preferably 0.02 to 0.5 g/m$^2$ in terms of the solid content. If the coating amount is less than 0.01g/m$^2$, sufficient adhesive strength between the adhesion-modifying layer and a different layer may not be obtained, and if the coating amount exceeds 1 g/m$^2$, blocking occurs and it may sometimes result in a problem in practical use.

The adhesion-modifying layer may be formed by either applying the coating liquid to a biaxially oriented polyamide-based resin film substrate or applying the coating liquid to an unstretched or monoaxially stretched polyamide-based resin film substrate, and thereafter drying the coating liquid, and further, if necessary, carrying out heat fixation after monoaxial stretching or biaxial stretching. The drying temperature after the coating liquid application is not less than 150°C, and preferably not less than 200°C, and the coating film becomes firm by drying and the heat fixation to remarkably improve the adhesive properties between the adhesion-modifying layer and the polyamide-based resin film substrate.

EXAMPLES

Next, the present invention will be described further in detail with reference to examples, but the present invention should not be limited to the following examples. Film evaluation was carried out by the following measurement methods.

(1) Impact strength

Using a film impact tester manufactured by Toyo Seiki Seisaku-sho, Ltd., measurement was carried out 10 times in an environment of a temperature of 23°C and a relative humidity of 65%, and the average value was used for the evaluation.

(2) Pinhole resistance

Using a Gelbo Flex tester BE 1006 equipped with a thermostat bath manufactured by TESTER SANGYO CO,. LTD., the number of pinholes was measured by the following method.

After polyester-based adhesives [a mixture of TM-590 (product name) and CAT-56 (product name) manufactured by Toyo-Morton Ltd. mixed at a ratio of 6.25/1, (solid content concentration 23%)] were applied to a film in a manner that the resin solid content after drying became 3 g/m$^2$, a 40 μm-thick linear low density polyethylene film (L-LDPE film: manufactured by TOYOBO CO., LTD.; LIX (registered trade mark) L4102) was dry-laminated, and the obtained laminate was aged in an environment of 40°C for 3 days to give a laminate film.

The obtained laminate film was cut in a size of 12 inches × 8 inches and formed into a cylinder having a diameter of 3.5 inches, and one end of the cylindrical film was fixed to a fixed head side of the Gelbo Flex tester and the other end was fixed to a movable head side thereof, and the initial holding interval was set to 7 inches.

The laminate film was subjected to bending fatigue involving torsion at 440 degrees by the initial 3.5-inch stroke and the subsequent straight lateral movement by the remaining 2.5-inch stroke to complete all the strokes, and this bending fatigue was carried out at a speed of 40 cycles/min 1000 times. The number of pinholes generated in the laminate film was counted. The measurement was performed in an environment of 1°C. The above-mentioned measurement was carried out 3 times and the average value was employed for the evaluation.

(3) Haze

Using a direct reading type haze meter No. 206 manufactured by Toyo Seiki Seisaku-sho, Ltd., measurement was carried out in accordance with JIS-K-7105.

Calculation was performed based on the following: Haze (%) = [Td (diffuse transmittance%)/Tt (total light transmittance%)] $\times$ 100.

(4) Coefficient of static friction

The coefficient of static friction was measured in an environment of a temperature of 23°C and a relative humidity of 65% RH in accordance with JIS-K-7125 by joining surfaces which were not brought into contact with a cooling roll in the extrusion process.

(5) Laminate strength

The laminate strength was measured to grasp the strength against cohesive failure of the film in the thickness direction.

The laminate film described in the explanation of the pinhole resistance evaluation was cut into a strip form in a size of 15 mm width $\times$ 100 mm length, and one end of the laminate film was separated at the interface between the biaxially oriented polyamide-based resin film and the linear low density polyethylene film. Using Tensilon model UMTII-500, manufactured by Toyo Baldwin Ltd., the laminate strength was measured 5 times under conditions of a temperature of 23°C, a relative humidity of 65%RH, a pulling speed of 200 mm/min, and a separating angle of 90°, and the average value was used for the evaluation.

(6) Laminate strength in a water adhesion condition after hot water treatment

After being immersed in hot water at 90°C for 30 minutes, the laminate film was left at room temperature for about 30 seconds, and while water was jetted to the interface between the biaxially oriented polyamide-based resin film and the polyethylene film, the laminate strength was measured 5 times by the same method as described above and the average value was used for the evaluation.

(7) Whitening after boiling

A four-side sealed bag was produced by cutting two films each in a size of 12 cm $\times$ 12 cm (sealing width in each side: 1 cm) from the laminate film described in the explanation for the pinhole resistance evaluation, sealing three sides thereof, filling the resulting sealed films with 100 ml of water, and further sealing the remaining side. After boiled under the conditions of 95°C $\times$ 30 min, the sealed bag was immersed in cold water and the film appearance was observed.

[Preparation of coating liquid (copolymerized polyester aqueous dispersion) for adhesion-modifying layer formation]

<Preparation of polyester A>

An autoclave made of stainless steel and equipped with a stirrer, a thermometer, and a partially refluxing condenser was filled with 466 parts of dimethyl terephthalate, 466 parts of dimethyl isophthalate, 401 parts of neopentyl glycol, 443 parts of ethylene glycol, and 0.52 parts of tetra-n-butyl titanate, and a transesterification reaction was carried out at 160 to 220°C for 4 hours. Next, 23 parts of fumaric acid was added thereto, and the temperature was increased from 200°C to 220°C over 1 hour and an esterification reaction was carried out. Then, the temperature was increased to 255°C, and the reaction system was gradually decompressed and thereafter, a reaction was carried out under a reduced pressure of 0.2 mmHg for 1.5 hours while the reaction system was stirred to give a polyester A. The obtained polyester A had a glass transition temperature of 60°C and a weight average molecular weight of 12000.

The composition of the polyester A was as follows:

the dicarboxylic acid component

terephthalic acid     48% by mole

isophthalic acid      48% by mole

fumaric acid 4% by mole

the diol component

neopentyl glycol     50% by mole

ethylene glycol      50% by mole.

<Preparation of polyester aqueous dispersion A>

A reactor equipped with a stirrer, a thermometer, a reflux condenser, and a quantitative titration apparatus was filled with 75 parts of the polyester A, 56 parts of methyl ethyl ketone, and 19 parts of isopropyl alcohol, and the mixture was heated at 65°C and stirred to dissolve the resin. After the resin was completely dissolved, a solution obtained by dissolving a mixture of 17.5 parts of methacrylic acid and 7.5 parts of ethyl acrylate, and 1.2 parts of azobisdimethylvaleronitrile in 25 parts of methyl ethyl ketone was dropwise added at 0.2 ml/min to the polyester solution, and on completion of the dropwise addition, the resulting solution was stirred further for 2 hours. After the reaction solution was sampled (5 g) for analysis, 300 parts of water and 25 parts of trisethylamine were added to the reaction solution, and the resulting reaction solution was stirred for 1 hour to prepare a dispersion of a grafted polyester. Thereafter, the temperature of the dispersion was increased to 100°C, and methyl ethyl ketone, isopropyl alcohol, and excess triethylamine were removed by distillation to give a polyester aqueous dispersion A.

<Preparation of coating liquid A for adhesion-modifying layer formation>

Thereafter, the dispersion A was diluted with water in a manner that the solid content concentration became 5% to give a coating liquid (polyester aqueous dispersion) A for adhesion-modifying layer formation.

<Preparation of polyester aqueous dispersion B>

The polyester aqueous dispersion B was obtained in the same preparation manner as described above, except that the mixing ratio was changed to 90 parts of the polyester A, 7.0 parts of methacrylic acid, 3.0 parts of ethyl acrylate, and 0.48 parts of azobisdimethylvaleronitrile.

<Preparation of coating liquid B for adhesion-modifying layer formation>

Thereafter, the dispersion B was diluted with water in a manner that the solid content concentration became 5% to give a coating liquid B for adhesion-modifying layer formation.

<Preparation of polyester B>

The polyester B was obtained in the same manner as that for the polyester A, except that the mixing ratio was changed to 457 parts of dimethyl terephthalate, 452 parts of dimethyl isophthalate, and 7.4 parts of dimethyl-5-sodium sulfoisophthalate. The obtained polyester B had a glass transition temperature of 62°C and a weight average molecular weight of 12000.

The composition of the polyester B was as follows:

the dicarboxylic acid component

terephthalic acid               49% by mole

isophthalic acid             48.5% by mole

5-sodium sulfoisophthalate   2.5% by mole

the diol component

neopentyl glycol             50% by mole

ethylene glycol             50% by mole.

<Preparation of coating liquid C for adhesion-modifying layer formation>

After a copolymerized polyester-based aqueous dispersion C was obtained in the same manner as that for the coating liquid A, except that 100 parts of the polyester B was used and components such as methacrylic acid, ethyl acrylate, and azobismethylvaleronitrile were not added, the dispersion C was diluted with water in a manner that the solid content concentration became 5% to give a coating liquid C for adhesion-modifying layer formation.

[Polyamide resin]

Chips A were made of nylon 6 [GLAMIDE (registered trade mark) T-810, manufactured by TOYOBO CO., LTD.] and obtained by ring-opening polymerization of ε-caprolactam using a batch type polymerization can, and had a relative viscosity of 2.8 when measured at 20°C (in the case of use in the form of a 96% concentrated sulfuric acid solution). The glass transition temperature Tg, low temperature crystallization temperature Tc, and melting point Tm (measured by melting, quenching, and crushing the chips and subjecting the obtained sample to the measurement by a differential scanning calorimeter at a heating rate of 10°C/min) were 40°C, 68°C, and 225°C, respectively.
Chips B were produced by melting and kneading 95.0% by mass of the chips A and 5.0% by mass of ethylene bis(stearic acid amide) [Light Amide WE-183 (product name), manufactured by KYOEISHA CHEMICAL CO., LTD.] by a biaxial bent type extruder, and thereafter cutting the kneaded mixture by a strand cutting method.
Chips C were produced by melting and kneading 95.0% by mass of the chips A and 5.0% by mass of porous agglomerated silica [Sylysia 350 (product name), manufactured by FUJI SILYSIA CHEMICAL, LTD., fine pore volume 1.6 ml/g, and average particle diameter 3.9 μm], and thereafter cutting the kneaded mixture by a strand cutting method.
The characteristics of the chips A to C are shown in Table 1.

[Table1]

| | Base material | | Additive | |
|---|---|---|---|---|
| | Kind | Relative viscosity | Kind | Additive amount (% bv mass) |
| Chip A | Ny6 | 2.9 | - | - |
| Chip B | Ny6 | 2.9 | Light Amide WE-183 | 5.0 |
| Chip C | Ny6 | 2.9 | Sylysia 350 | 5.0 |

[Polyamide-based block copolymer (elastomer)]

The elastomers A to P were polymerized according to the polyamide-based block copolymer compositions shown in Table 2. A 70-L pressure container equipped with a stirrer, a thermometer, a torque meter, a pressure meter, a nitrogen gas introduction port, a pressure adjustment apparatus, and a polymer takeout port was filled with ε-caprolactam, γ-butyrolactone, or ω-lauryl lactam as the hard part; adipic acid [Adipic acid (product name) manufactured by Ube Industries, Ltd.] as a bonding part in the same molar amount as that of the following polyoxyalkylene glycol; and a polyoxytetramethylene glycol, a polyoxypropylene glycol, or a polyoxyethylene glycol as the soft part, and after the container was sufficiently purged with nitrogen, the contents were gradually heated while a nitrogen gas was supplied at a flow rate of 300 L/min. The temperature was increased from room temperature to 230°C over 3 hours, and polymerization was carried out at 230°C for 6 hours. The pressure in the container was adjusted to 0.05 MPa from starting of the heating.

[Table2]

| | Hard part | Soft part | Number average molecular weight of soft part | Hard part / Soft part (part by mass) | $478.74$ $Mn^{-0.2989}$ | Chip formability |
|---|---|---|---|---|---|---|
| Elastomer A | ε-caprolactam caprolactam manufactured by Sumitomo Chemical Co., Ltd. | polyoxytetramethylene glycol Poly THF2000S (product name) manufactured by BASF Japan Ltd. | 2000 | 37/63 | 49.4 | O.K |
| Elastomer B | ε-caprolactam | polyoxytetramethylene glycol PTMG1500 (product name) manufactured by Mitsubishi Chemical Corporation | 1500 | 37/83 | 53.8 | O.K |
| Elastomer C | ε-caprolactam | polyoxytetramethylene glycol Poly THF1000S (product name) manufactured by BASF Japan Ltd. | 1000 | 37/83 | 60.7 | O.K |
| Elastomer D | ε-caprolactam | polyoxytetramethylene glycol | 1000 | 28/72 | 60.7 | O.K |
| Elastomer E | ε-caprolactam | polyoxytetramethylene glycol | 1000 | 20/80 | 60.7 | O.K |
| Elastomer F | ε-caprolactam | polyoxytetramethylene glycol PTMG850 (product name) manufactured by Mitsubishi Chemical Corporation | 850 | 32.5/67.5 | 63.8 | O.K |
| Elastomer G | ε-caprolactam | polyoxytetramethylene glycol | 850 | 24/76 | 63.8 | O.K |
| Elastomer H | ε-caprolactam | polyoxytetramethylene glycol PTMG650 (product name) manufactured by Mitsubishi Chemical Corporation | 650 | 24/76 | 69.1 | O.K |
| Elastomer I | ε-caprolactam | polyoxypropylene glycol SanixPP1000 (product name) manufactured by Sanyo Chemical Industries, Ltd. | 1000 | 37/63 | 60.7 | O.K |
| Elastomer J | γ-butyrolactone gamma butyrolactone (product name) manufactured by Mitsubishi Chemical Corporation | polyoxytetramethylene glycol | 2000 | 37/83 | 49.4 | O.K |
| Elastomer K | ε-caprolactam | polyoxytetramethylene glycol | 650 | 40/60 | 69.1 | O.K |

EP 2 974 861 A1

(continued)

| | Hard part | Soft part | Number average molecular weight of soft part | Hard part / Soft part (part by mass) | 478.74 Mn$^{-0.2989}$ | Chip formability |
|---|---|---|---|---|---|---|
| Elastomer L | ε-caprolactam | Dolyoxytetramethylene glycol | 650 | 55/45 | 69.1 | O.K |
| Elastomer M | ε-caprolactam | polyoxyethylene glycol PEG650 (product name) manufactured by American Polymer Standards Corporation | 650 | 50/50 | 69.1 | O.K |
| Elastomer N | ε-caprolactam | polyoxytetramethylene glycol | 2000 | 55/45 | 49.4 | O.K |
| Elastomer O | ω-lauryl lactam aminododekanoic acid (product name)manufactured by Ube Industries. Ltd. | polyoxytetramethylene glycol | 1000 | 60/40 | 60.7 | O.K |
| Elastomer P | ω-lauryl lactam | polyoxyethylene glycol PEG1000 (product name) manufactured bv DKS Co. Ltd | 1000 | 50/50 | 60.7 | O.K |

Next, the stirring was stopped, and the polymer in a melted state was taken in a strand-like form out of the polymer takeout port and cut by an underwater cutting method to produce elastomers A to P.

[Process for producing film]

A polyamide-based resin mixture, which had been adjusted in a manner that the water content became 0.09% by mass by a double cone type reduced pressure blender, was supplied to a monoaxial extruder for a core layer and a monoaxial extruder for a skin layer and melted, and thereafter, the mixture was layered in a skin layer A/core layer B/skin layer A configuration by a feed block, and extruded in a sheet-like form out of a T die. The sheet was firmly stuck to a cooling roll adjusted to 40°C by an electrostatic adhesion method to give an unstretched sheet of about 200 $\mu$m.

The electrostatic adhesion was carried out by applying a DC voltage of 8 kV to electrodes in which needles made of tungsten and having a tip end curvature radius of 0.04 mm, a diameter of 2 mm, and a length of 30 mm were buried at 1 mm pitches.

The obtained unstretched sheet was introduced into a roll type stretching machine, and stretched 1.8 times in the longitudinal direction at 80°C and further stretched 1.8 times at 70°C utilizing the circumferential speed difference of the rolls. Thereafter, each coating liquid mentioned above for adhesion-modifying layer formation was applied continuously by a gravure coating method to one surface of the film after longitudinal stretching. The coating amount of each coating liquid was adjusted in a manner that an adhesion-modifying layer of 0.2 g/m$^2$ was formed.

Successively, the monoaxially stretched film was led to a tenter type stretching machine, pre-heated in a zone at 110°C; stretched 1.2 times in a zone at 120°C, 1.7 times in a zone at 130°C, and 2.0 times in a zone at 160°C in the transverse direction; subjected to a heat fixation treatment while passing a zone at 180°C and a zone at 210°C; thereafter subjected to a relaxing treatment of 3% in a zone at 210°C and of 2% in a zone at 185°C; cooled while passing a zone at 120°C and a zone at 60°C; led to a film winder; and wound in a roll with both end parts cut off to give a 15 $\mu$m-thick biaxially oriented polyamide-based resin film. The configuration ratio between the skin layers A and the core layer B is shown in Table 3.

[Table3]

| | Ratio of layers | Prescription of raw material | | | | | | | | | Coating liquid for formation |
|---|---|---|---|---|---|---|---|---|---|---|---|
| | | Skin layer A | | | | Core layer B | | | | | |
| | | Chip A | Chip B | Chip C | Elastomer | Chip A | Chip B | Chip C | Elastomer | | |
| Example 1 | skin layer A / core layer B / skin layer A 1.5/12.0/1.5 | Chip A 84.0 | / Chip B 3.0 | / Chip C 10.0 | / Elastomer A 3.0 | Chip A 84.0 | / Chip B 3.0 | / Chip C 10.0 | / Elastomer A 3.0 | | coating liquid A |
| Example 2 | skin layer A / core layer B / skin layer A 1.5/12.0/1.5 | Chip A 82.0 | / Chip B 3.0 | / Chip C 10.0 | / Elastomer A 5.0 | Chip A 82.0 | / Chip B 3.0 | / Chip C 10.0 | / Elastomer A 5.0 | | coating liquid A |
| Example 3 | skin layer A / core layer B / skin layer A 1.5/12.0/1.5 | Chip A 86.0 | / Chip B 3.0 | / Chip C 10.0 | / Elastomer A 1.0 | Chip A 86.0 | / Chip B 3.0 | / Chip C 10.0 | / Elastomer A 1.0 | | coating liquid A |
| Example 4 | skin layer A / core layer B / skin layer A 1.5/12.0/1.5 | Chip A 84.0 | / Chip B 3.0 | / Chip C 10.0 | / Elastomer B 3.0 | Chip A 84.0 | / Chip B 3.0 | / Chip C 10.0 | / Elastomer B 3.0 | | coating liquid A |
| Example 5 | skin layer A / core layer B / skin layer A 1.5/12.0/1.5 | Chip A 82.0 | / Chip B 3.0 | / Chip C 10.0 | / Elastomer C 5.0 | Chip A 82.0 | / Chip B 3.0 | / Chip C 10.0 | / Elastomer C 5.0 | | coating liquid A |
| Example 6 | skin layer A / core layer B / skin layer A 1.5/12.0/1.5 | Chip A 84.0 | / Chip B 3.0 | / Chip C 10.0 | / Elastomer D 3.0 | Chip A 84.0 | / Chip B 3.0 | / Chip C 10.0 | / Elastomer E 3.0 | | coating liquid A |
| Example 7 | skin layer A / core layer B / skin layer A 1.5/12.0/1.5 | Chip A 84.0 | / Chip B 3.0 | / Chip C 10.0 | / Elastomer E 3.0 | Chip A 84.0 | / Chip B 3.0 | / Chip C 10.0 | / Elastomer E 3.0 | | coating liquid A |
| Example 8 | skin layer A / core layer B / skin layer A 1.5/12.0/1.5 | Chip A 84.0 | / Chip B 3.0 | / Chip C 10.0 | / Elastomer F 3.0 | Chip A 84.0 | / Chip B 3.0 | / Chip C 10.0 | / Elastomer F 3.0 | | coating liquid A |
| Example 9 | skin layer A / core layer B / skin layer A 1.5/12.0/1.5 | Chip A 84.0 | / Chip B 3.0 | / Chip C 10.0 | / Elastomer G 3.0 | Chip A 84.0 | / Chip B 3.0 | / Chip C 10.0 | / Elastomer G 3.0 | | coating liquid A |

(continued)

| | Ratio of layers | Prescription of raw material | | | | | | | | | Coating liquid for formation |
|---|---|---|---|---|---|---|---|---|---|---|---|
| | | Skin layer A | | | | Core layer B | | | | | |
| | | Chip A | Chip B | Chip C | Elastomer | Chip A | Chip B | Chip C | Elastomer | | |
| Example 10 | skin layer A / core layer B / skin layer A 1.5/12.0/1.5 | 84.0 | 3.0 | 10.0 | H 3.0 | 84.0 | 3.0 | 10.0 | H 3.0 | | coating liquid A |
| Example 11 | skin layer A / core layer B / skin layer A 1.5/12.0/1.5 | 84.0 | 3.0 | 10.0 | I 3.0 | 84.0 | 3.0 | 10.0 | I 3.0 | | coating liquid A |
| Example 12 | skin layer A / core layer B / skin layer A 1.5/12.0/1.5 | 84.0 | 3.0 | 10.0 | J 3.0 | 84.0 | 3.0 | 10.0 | J 3.0 | | coating liquid A |
| Example 13 | skin layer A / core layer B / skin layer A 1.0/13.0/1.0 | 84.0 | 3.0 | 10.0 | A 3.0 | 86.8 | 0.2 | 10.0 | A 3.0 | | coating liquid A |
| Example 14 | skin layer A / core layer B / skin layer A 1.5/12.0/1.5 | 84.0 | 3.0 | 10.0 | G 3.0 | 86.7 | 0.3 | 10.0 | G 3.0 | | coating liquid A |
| Example 15 | skin layer A / core layer B / skin layer A 2.5/10.0/2.5 | 84.0 | 3.0 | 10.0 | G 3.0 | 86.5 | 0.5 | 10.0 | G 3.0 | | coating liquid A |
| Example 16 | skin layer A / core layer B / skin layer A 1.5/12.0/1.5 | 84.0 | 3.0 | 10.0 | A 3.0 | 84.0 | 3.0 | 10.0 | A 3.0 | | coating liquid B |
| Example 17 | skin layer A / core layer B / skin layer A 1.5/12.0/1.5 | 84.0 | 3.0 | 10.0 | A 3.0 | 84.0 | 3.0 | 10.0 | A 3.0 | | coating liquid C |
| Comparative Example 1 | skin layer A / core layer B / skin layer A 1.5/12.0/1.5 | 84.0 | 3.0 | 10.0 | A 3.0 | 84.0 | 3.0 | 10.0 | A 3.0 | | absence |

EP 2 974 861 A1

18

(continued)

| | Ratio of layers | Prescription of raw material | | | | | | | | Coating liquid for formation |
|---|---|---|---|---|---|---|---|---|---|---|
| | | Skin layer A | | | | Core layer B | | | | |
| Comparative Example 2 | skin layer A / core layer B / skin layer A 1.5/12.0/1.5 | Chip A 82.0 / | Chip B 3.0 / | Chip C 10.0 / | Elastomer K 5.0 | Chip A 82.0 / | Chip B 3.0 / | Chip C 10.0 / | Elastomer K 5.0 | coating liquid A |
| Comparative Example 3 | skin layer A / core layer B / skin layer A 1.5/12.0/1.5 | Chip A 82.0 / | Chip B 3.0 / | Chip C 10.0 / | Elastomer L 5.0 | Chip A 82.0 / | Chip B 3.0 / | Chip C 10.0 / | Elastomer L 5.0 | coating liquid A |
| Comparative Example 4 | skin layer A / core layer B / skin layer A 1.5/12.0/1.5 | Chip A 82.0 / | Chip B 3.0 / | Chip C 10.0 / | Elastomer M 5.0 | Chip A 82.0 / | Chip B 3.0 / | Chip C 10.0 / | Elastomer M 5.0 | coating liquid A |
| Comparative Example 5 | skin layer A / core layer B / skin layer A 1.5/12.0/1.5 | Chip A 84.0 / | Chip B 3.0 / | Chip C 10.0 / | Elastomer N 3.0 | Chip A 84.0 / | Chip B 3.0 / | Chip C 10.0 / | Elastomer N 3.0 | coating liquid A |
| Comparative Example 6 | skin layer A / core layer B / skin layer A 1.5/12.0/1.5 | Chip A 86.0 / | Chip B 3.0 / | Chip C 10.0 / | Elastomer N 1.0 | Chip A 86.0 / | Chip B 3.0 / | Chip C 10.0 / | Elastomer N 1.0 | coating liquid A |
| Comparative Example 7 | skin layer A / core layer B / skin layer A 1.5/12.0/1.5 | Chip A 84.0 / | Chip B 3.0 / | Chip C 10.0 / | Elastomer O 3.0 | Chip A 84.0 / | Chip B 3.0 / | Chip C 10.0 / | Elastomer C 3.0 | coating liquid A |
| Comparative Example | skin layer A / core layer B / skin layer A 1.5/12.0/1.5 | Chip A 84.0 / | Chip B 3.0 / | Chip C 10.0 / | Elastomer P 3.0 | Chip A 84.0 / | Chip B 3.0 / | Chip C 10.0 / | Elastomer P 3.0 | coating liquid A |
| Comparative Example 9 | skin layer A / core layer B / skin layer A 1.5/12.0/1.5 | Chip A 86.5 / | Chip B 3.0 / | Chip C 10.0 / | Elastomer A 0.5 | Chip A 86.5 / | Chip B 3.0 / | Chip C 10.0 / | Elastomer A 0.5 | coating liquid A |
| Comparative Example 10 | skin layer A / core layer B / skin layer A 1.5/12.0/1.5 | Chip A 78.0 / | Chip B 3.0 / | Chip C 10.0 / | Elastomer A 9.0 | Chip A 78.0 / | Chip B 3.0 / | Chip C 10.0 / | Elastomer A 9.0 | coating liquid A |

| | Ratio of layers | Prescription of raw material | | | | | | | | Coating liquid for formation |
|---|---|---|---|---|---|---|---|---|---|---|
| | | Skin layer A | | | | Core layer B | | | | |
| Comparative Example 11 | skin layer A / core layer B / skin layer A | Chip / | Chip / | Chip C / | Elastomer K | Chip A / | Chip B / | Chip C / | Elastomer K | coating liquid A |
| | 1.5/12.0/1.5 | 78.0 | 3.0 | 10.0 | 9.0 | 78.0 | 3.0 | 10.0 | 9.0 | |

Examples 1 to 17 and Comparative Examples 1 to 11

Respective biaxially oriented polyamide-based resin films of Examples 1 to 17 and Comparative Examples 1 to 11 were obtained by using the polyamide resins shown in Table 1 and the polyamide-based block copolymers shown in Table 2, mixing these resins and copolymers as shown in Table 3, and carrying out the above-mentioned process for producing film.

Using the obtained biaxially stretched polyamide-based resin films, laminate strength, pinhole resistance in the Gelbo Flex test, haze, impact strength, coefficient of static friction, and whitening after boiling were evaluated. The evaluation results of Examples 1 to 17 are shown in Table 4 and the evaluation results of Comparative Examples 1 to 11 are shown in Table 5.

[Table 4]

| | Thickness [μm] | Polvamide-based block copolymer | | | | | | Content ratio | Laminate strength | Laminate strength in immersed-in-water state after hot water treatment | Gelbo Flex test | Haze | Impact strength | Coefficient of static friction | Whitening after boiling treatment |
|---|---|---|---|---|---|---|---|---|---|---|---|---|---|---|---|
| | | Hard part monomer | Soft part | | | | | | | | | | | | |
| | | | Monomer | Molecular weight Mn | Y [parts by mass] | 478.74x Mn^{-0.2989} | | [% by mass ] | [N/15mm] | [N/15mm] | [average number of defects(three times)] | [%] | [J] | [-] | |
| Example 1 | 15 | ε-caprol-actam | polyoxytetramethyl-ene glycol | 2000 | 63 | 49.4 | | 3.0 | 7.8 | 4.0 | 1.3 | 3.8 | 0.96 | 0.55 | absence |
| Example 2 | 15 | ε-caprol-actam | polyoxytetramethyl-ene glycol | 2000 | 63 | 49.4 | | 5.0 | 7.5 | 3.5 | 0.3 | 4.2 | 0.95 | 0.60 | absence |
| Example 3 | 15 | ε-caprol-actam | polyoxytetramethyl-ene glycol | 2000 | 63 | 49.4 | | 1.0 | 8.3 | 4.0 | 3.5 | 3.2 | 1.05 | 0.50 | absence |
| Example 4 | 15 | ε-caprol-actam | polyoxytetramethyl-ene glycol | 1500 | 63 | 53.8 | | 3.0 | 7.9 | 4.0 | 1.6 | 3.0 | 1.00 | 0.53 | absence |
| Example 5 | 15 | ε-caprol-actam | polyoxytetramethyl-ene glycol | 1000 | 63 | 60.7 | | 5.0 | 8.0 | 4.2 | 4.2 | 2.9 | 1.05 | 0.54 | absence |
| Example 6 | 15 | ε-caprol-actam | polyoxytetramethyl-ene glycol | 1000 | 72 | 60.7 | | 3.0 | 7.8 | 4.0 | 2.0 | 2.3 | 1.03 | 0.58 | absence |
| Example 7 | 15 | ε-caprol-actam | polyoxytetramethyl-ene glycol | 1000 | 80 | 60.7 | | 3.0 | 8.1 | 4.0 | <u>1.8</u> | 2.9 | 1.05 | 0.57 | absence |
| Example 8 | 15 | ε-caprol-actam | polyoxytetramethyl-ene glycol | 850 | 67.5 | 63.8 | | 3.0 | 7.9 | 4.0 | 4.5 | 2.9 | 1.02 | 0.52 | absence |
| Example 9 | 15 | ε-caprol-actam | polyoxytetramethyl-ene glycol | 850 | 76 | 63.8 | | 3.0 | 7.6 | 3.6 | <u>2.7</u> | 3.2 | 1.17 | 0.55 | absence |
| Example 10 | 15 | ε-caprol-actam | polyoxytetramethyl-ene glycol | 650 | 76 | 69.1 | | 3.0 | 7.5 | 3.5 | <u>3.5</u> | 3.0 | 1.22 | 0.52 | absence |

(continued)

| | Thickness [μm] | Polvamide-based block copolymer | | | | | | Content ratio | Laminate strength | Laminate strength in immersed-in-water state after hot water treatment | Gelbo Flex test | Haze | Impact strength | Coefficient of static friction | Whitening after boil-ing treat-ment |
| | | Hard part monomer | Soft part | | | | | | | | | | | | |
| | | | Monomer | Molecular weight Mn | Y [parts by mass] | 478.74x Mn^{-0.2989} | [% by mass ] | [N/15mm] | [N/15mm] | [average number of defects(three times)] | [%] | [J] | [-] | |
| Example 11 | 15 | ε-caprolactam | polyoxypropylene glycol | 1000 | 63 | 60.7 | 3.0 | 8.1 | 4.0 | 2.1 | 3.4 | 1.04 | 0.57 | absence |
| Example 12 | 15 | γ-butyrolac-tone | polyoxytetramethyl-ene glycol | 2000 | 63 | 49.4 | 3.0 | 7.5 | 3.5 | 1.5 | 3.7 | 0.97 | 0.59 | absence |
| Example 13 | 15 | ε-caprol-actam | polyoxytetramethyl-ene glycol | 2000 | 63 | 49.4 | 3.0 | 8.0 | 4.0 | 1.2 | 3.7 | 0.95 | 0.60 | absence |
| Example 14 | 15 | ε-caprol-actam | polyoxytetramethyl-ene glycol | 850 | 76 | 63.8 | 3.0 | 7.8 | 4.0 | 1.1 | 3.8 | 0.97 | 0.58 | absence |
| Example 15 | 15 | ε-caprol-actam | polyoxytetramethyl-ene glycol | 850 | 76 | 63.8 | 3.0 | 7.5 | 3.5 | 1.3 | 3.9 | 0.96 | 0.55 | absence |
| Example 16 | 15 | ε-caprol-actam | polyoxytetramethyl-ene glycol | 2000 | 63 | 49.4 | 3.0 | 7.8 | 3.7 | 1.3 | 3.8 | 0.96 | 0.55 | absence |
| Example 17 | 15 | ε-caprol-actam | polyoxytetramethyl-ene glycol | 2000 | 63 | 49.4 | 3.0 | 7.8 | 3.7 | 1.3 | 3.8 | 0.96 | 0.55 | absence |

It can be understood from Table 4 that the films of Examples 1 to 17 were excellent in laminate strength, laminate strength in an immersed-in-water state after the hot water treatment, pinhole resistance by the Gelbo Flex test, haze, impact strength, coefficient of static friction, and appearance after the boiling treatment. On the other hand, from Table 5, the films of Comparative Examples 1 to 11 were found to be either failing to simultaneously satisfy laminate strength and pinhole resistance, low in transparency, or causing whitening after the boiling treatment.

[Table5]

| | Thickness [μm] | Polyamide-based block copolymer | | | | | | Laminate strength [N/15mm] | Laminate strength in immersed-in-water state after hot water treatment [N/15mm] | Gelbo Flex test [average number of defects (three times)] | Haze [%] | Impact strength [J] | Coefficient of static friction [-] | Whitening after boiling treatment |
| | | Hard part monomer | Soft part | | | | Content ratio [% by mass] | | | | | | | |
| | | | Monomer | Molecular weight Mn | Y [parts by mass] | 478.74× Mn^-0.2989 Mn | | | | | | | | |
| Comparative Example 1 | 15 | ε-caprolactam | polyoxytetramethylene glycol | | 63 | 49.4 | 3.0 | 7.3 | 1.0 | 1.3 | 3.6 | 0.96 | 0.55 | absence |
| Comparative Example 2 | 15 | ε-caprolactam | polyoxytetramethylene glycol | 650 | 60 | 69.1 | 5.0 | 8.2 | 3.5 | 6.2 | 3.0 | 1.07 | 0.55 | absence |
| Comparative Example 3 | 15 | ε-caprolactam | polyoxytetramethylene glycol | 650 | 45 | 69.1 | 5.0 | 8.5 | 4.0 | 8.4 | 2.4 | 1.13 | 0.52 | absence |
| Comparative Example 4 | 15 | ε-caprolactam | polyoxyethylene glycol | 650 | 50 | 69.1 | 5.0 | 8.0 | 3.5 | 6.9 | 3.1 | 1.02 | 0.54 | presence |
| Comparative Example 5 | 15 | ε-caprolactam | polyoxytetramethylene glycol | 2000 | 45 | 49.4 | 3.0 | 2.5 | 0.5 | 1.6 | 3.3 | 1.16 | 0.53 | absence |
| Comparative Example 6 | 15 | ε-caprolactam | polyoxytetramethylene glycol | 2000 | 45 | 49.4 | 1.0 | 4.0 | 0.8 | 3.6 | 2.4 | 1.19 | 0.52 | absence |
| Comparative Example 7 | 15 | ω-laurinlactam | polyoxytetramethylene glycol | 1000 | 40 | 60.7 | 3.0 | 3.0 | 0.5 | 6.6 | 2.7 | 1.21 | 0.55 | absence |

| | Thick-ness [μm] | Hard part monomer | Polyamide-based block copolymer | | | | | Laminate strength | Laminate strength in immersed-in-water state after hot water treatment | Gelbo Flex test | Haze | Impact strength | Coefficient of static friction | Whitening after boiling treatment |
| | | | Soft part | | | | Content ratio [% by mass] | | | | | | | |
| | | | Monomer | Molecular weight Mn | Y [parts by mass] | $478.74 \times Mn^{-0.2989}$ Mn | | [N/15mm] | [N/15mm] | [average number of defects(three times)] | [%] | [J] | [-] | |
| Comparative Example 8 | 15 | ω-laurinlactam | polyoxyethylene glycol | 1000 | 50 | 60.7 | 3.0 | 2.7 | 0.5 | 6.1 | 3.4 | 1.00 | 0.58 | presence |
| Comparative Example 9 | 15 | ε-caprolactam | polyoxytetramethylene glycol | 2000 | 63 | 49.4 | 0.5 | 8.5 | 4.0 | 6.0 | 2.0 | 1.20 | 0.50 | absence |
| Comparative Example 10 | 15 | ε-caprolactam | polyoxytetramethylene glycol | 2000 | 63 | 49.4 | 9.0 | 7.0 | 2.0 | 0.0 | 6.2 | 0.80 | 0.68 | absence |
| Comparative Example 11 | 15 | ε-caprolactam | polyoxytetramethylene glycol | 650 | 60 | 69.1 | 9.0 | 7.0 | 2.0 | 3.2 | 3.0 | 0.85 | 0.60 | absence |

EP 2 974 861 A1

**EP 2 974 861 A1**

INDUSTRIAL APPLICABILITY

Since the biaxially stretched polyamide-based resin film of the present invention has excellent properties as described above, it is usable not only for small bags for soup but also for pickles bags, large bags for liquids for commercial use, bag-in-boxes, and also for packaging materials with high design properties.

**Claims**

1. A biaxially oriented polyamide-based resin film comprising a polyamide resin and 1 to 5% by mass of a polyamide-based block copolymer, and being laminated with an adhesion-modifying layer containing a copolymerized polyester on at least one surface thereof, wherein the polyamide-based block copolymer comprises a hard part of a cyclic lactam residue having 4 to 10 carbon atoms and a soft part of a residue of a polyoxypropylene glycol or a polyoxytetramethylene glycol having a number average molecular weight of 500 to 3000, and the content X of the hard part, the content Y of the soft part, and the number average molecular weight Mn of the soft part satisfy the following equations (1) and (2):

$$X + Y = 100 \ (\text{parts by mass}) \quad (1);$$

$$478.74 \times \text{Mn}^{-0.2989} \leq Y \leq 93 \ (\text{parts by mass}) \quad (2).$$

2. The biaxially oriented polyamide-based resin film according to claim 1, wherein the biaxially oriented polyamide-based resin film contains 0.05 to 0.30% by mass of ethylene bis(stearic acid amide) and 0.3 to 0.8% by mass of porous agglomerated silica having a fine pore volume of 1.0 to 1.8 ml/g and an average particle size of 2.0 to 7.0 $\mu$m.

3. The biaxially oriented polyamide-based resin film according to claim 1 or 2, wherein the biaxially oriented polyamide-based resin film has a monolayer structure or a laminated structure having two or more layers and contains 0.05 to 0.30% by mass of an organic lubricant.

4. The biaxially oriented polyamide-based resin film according to any one of claims 1 to 3, wherein the adhesion-modifying layer is formed by applying a coating liquid containing a copolymerized polyester-based aqueous dispersion.

**EP 2 974 861 A1**

## INTERNATIONAL SEARCH REPORT

| International application No. |
|---|
| PCT/JP2014/054488 |

A. CLASSIFICATION OF SUBJECT MATTER
*B32B27/34*(2006.01)i, *C08G69/40*(2006.01)i, *C08K3/36*(2006.01)i, *C08K5/20*(2006.01)i, *C08L77/00*(2006.01)i

According to International Patent Classification (IPC) or to both national classification and IPC

B. FIELDS SEARCHED

Minimum documentation searched (classification system followed by classification symbols)
B32B1/00-43/00, C08G69/40, C08K3/36, C08K5/20, C08L77/00

Documentation searched other than minimum documentation to the extent that such documents are included in the fields searched
Jitsuyo Shinan Koho 1922-1996 Jitsuyo Shinan Toroku Koho 1996-2014
Kokai Jitsuyo Shinan Koho 1971-2014 Toroku Jitsuyo Shinan Koho 1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 4-314741 A (Toray Industries, Inc.),<br>05 November 1992 (05.11.1992),<br>claims; paragraphs [0002], [0019], [0020]<br>(Family: none) | 1,3,4<br>2 |
| Y<br>A | JP 05-230365 A (Toray Industries, Inc.),<br>07 September 1993 (07.09.1993),<br>claims; paragraphs [0002], [0016], [0027],<br>[0028], [0034]<br>(Family: none) | 1,3,4<br>2 |
| Y<br>A | JP 09-29910 A (Toyobo Co., Ltd.),<br>04 February 1997 (04.02.1997),<br>claims; paragraphs [0002], [0006]<br>& US 5817425 A & EP 754545 A2<br>& DE 69608857 D & DE 69608857 T<br>& CN 1148007 A | 1,3,4<br>2 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>20 May, 2014 (20.05.14) | Date of mailing of the international search report<br>03 June, 2014 (03.06.14) |
|---|---|
| Name and mailing address of the ISA/<br>Japanese Patent Office | Authorized officer |
| Facsimile No. | Telephone No. |

Form PCT/ISA/210 (second sheet) (July 2009)

28

# EP 2 974 861 A1

**INTERNATIONAL SEARCH REPORT**

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 09-39180 A  (Toyobo Co., Ltd.),<br>10 February 1997 (10.02.1997),<br>claims; paragraphs [0002], [0006]<br>& US 5817425 A          & EP 754545 A2<br>& DE 69608857 D          & DE 69608857 T<br>& CN 1148007 A | 1,3,4<br>2 |
| Y<br>A | JP 2004-137394 A  (Unitika Ltd.),<br>13 May 2004 (13.05.2004),<br>claims; paragraphs [0001], [0005]<br>(Family: none) | 3<br>1,2,4 |
| Y<br>A | JP 2002-348465 A  (Unitika Ltd.),<br>04 December 2002 (04.12.2002),<br>claims; paragraphs [0001], [0005], [0015]<br>(Family: none) | 3<br>1,2,4 |
| A | JP 2010-253711 A  (Toyobo Co., Ltd.),<br>11 November 2010 (11.11.2010),<br>claims; paragraphs [0001], [0049] to [0051],<br>[0055], [0057], [0058]<br>(Family: none) | 1-4 |
| A | JP 09-143283 A  (Toyobo Co., Ltd.),<br>03 June 1997 (03.06.1997),<br>claims; paragraphs [0022], [0033]<br>(Family: none) | 1-4 |
| P,X | WO 2013/084845 A1  (Toyobo Co., Ltd.),<br>13 June 2013 (13.06.2013),<br>claims; paragraph [0082]<br>(Family: none) | 1-4 |

Form PCT/ISA/210 (continuation of second sheet) (July 2009)

**EP 2 974 861 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002179817 A
- JP HEI11322974 A